# EUROPEAN PATENT SPECIFICATION

(11) **EP 0 453 568 B1**
(45) Date of publication and mention of the grant of the patent: **02.11.1995**
(21) Application number: 90900995.3
(22) Date of filing: 13.12.1989
(51) Int. Cl.: G06F 3/033, G06K 11/06

(54) **ELECTRONIC BLACKBOARD APPARATUS**
ELEKTRONISCHE TAFEL
TABLEAU ELECTRONIQUE

(30) Priority: 13.12.1988 JP 313015/88
(43) Date of publication of application: 30.10.1991
(73) Proprietor: ETO, Yoji, Kitakatsushika-gun Saitama-ken, 340-02 (JP); MURAKAMI, Azuma, Kitakatsushika-gun Saitama-ken, 340-02 (JP); KAWAHARA, Tetsumi, Kitakatsushika-gun Saitama-ken, 340-02 (JP); AOKI, Kazuo, Kitakatsushika-gun Saitama-ken, 340-02 (JP); TOMOFUJI, Yoshiaki, Kitakatsushika-gun Saitama-ken, 340-02 (JP); IZAWA, Kiyosato, Kitakatsushika-gun Saitama-ken, 340-02 (JP); TANAKA, Takeshi, Kitakatsushika-gun Saitama-ken, 340-02 (JP); INASHIMA, Satoshi, Kitakatsushika-gun Saitama-ken, 340-02 (JP); KINOSHITA, Seiji, Kitakatsushika-gun Saitama-ken, 340-02 (JP)
(72) Inventor: ETO, Yoji, Kitakatsushika-gun Saitama-ken, 340-02 (JP); MURAKAMI, Azuma, Kitakatsushika-gun Saitama-ken, 340-02 (JP); KAWAHARA, Tetsumi, Kitakatsushika-gun Saitama-ken, 340-02 (JP); AOKI, Kazuo, Kitakatsushika-gun Saitama-ken, 340-02 (JP); TOMOFUJI, Yoshiaki, Kitakatsushika-gun Saitama-ken, 340-02 (JP); IZAWA, Kiyosato, Kitakatsushika-gun Saitama-ken, 340-02 (JP); TANAKA, Takeshi, Kitakatsushika-gun Saitama-ken, 340-02 (JP); INASHIMA, Satoshi, Kitakatsushika-gun Saitama-ken, 340-02 (JP); KINOSHITA, Seiji, Kitakatsushika-gun Saitama-ken, 340-02 (JP)
(74) Representative: TER MEER STEINMEISTER & PARTNER GbR
(86) International application number: JP8901251
(87) International publication number: WO9007150

(56) References cited:
- JP-A-61 246 829
- JP-A-62 254 227
- JP-A-62 256 024

## Description

### TECHNICAL FIELD

This invention relates to an electronic blackboard apparatus consisting of a combination of a coordinate input device integrally formed with a screen and a projection device for projecting information onto this screen.

### BACKGROUND ART

A coordinate input device has been in use in which physical variates are exchanged between a position indicator, such as a stylus pen or a cursor, and an input surface, thereby detecting the coordinate values of a point on the input surface indicated by the position indicator.

The coordinate values detected by the coordinate input device are first transmitted to a personal computer or the like and stored in the memory thereof. In the personal computer or the like, an image signal which represents, by dots or the like, the point indicated by the position indicator, is prepared on the basis of the above coordinate values, or else a predetermined calculation is performed, preparing an image signal indicating the results thereof. Such an image signal is transmitted to, for example, a CRT and displayed on the screen thereof.

The input surface of the coordinate input device and the screen of the CRT are totally separate from each other in terms of the place where they are displayed. Accordingly, when entering a character or a figure by operating the position indicator on the input surface, the image of what is entered may be displayed at a place totally separate from where the position indicator is being operated, resulting in operational anxiety and a rather poor operability.

The above problem has been eliminated in an apparatus in which a flat display, such as a liquid crystal display panel, and the input surface of a coordinate input device are integrally stacked together one upon the other. With this apparatus, disclosed in JP 62 - 254227, the dots or the like representing a point indicated by the position indicator can be displayed, for example, directly below that point, thus giving the effect of using an ordinary writing instrument.

However, the largest flat display put into practical use provides a display area of only approximately that of the B5 size. Thus, the area for coordinate input in the above apparatus is limited to the size of a B5 or less.

JP 62 - 256024 discloses a large tablet of integrated input/output type, by providing a projector screen on the opposite side and on the input plane of a light transparent tablet to display an image on a screen by a projector, and coinciding a video from the projector with a position data obtained from the tablet

### DISCLOSURE OF THE INVENTION

It is a principal object of this invention to provide an image input and display apparatus which is capable of displaying input information immediately without being restricted in the coordinate input area thereof and which allows operations related to the displayed image, such as entering, to be performed comfortably and accurately, and which, further, allows the image to be confirmed with ease even from a relatively distant place.

To achieve the above object, there are provided a screen, a coordinate input device integrally formed with the screen, an input instrument for indicating to the coordinate input device a position on one input side of the screen which it should measure, and a projection means adapted to project, from the input side, information input by the input instrument onto the screen at a position corresponding to the position where it is input. With this arrangement, information input by the input instrument can be immediately projected for display from the input side onto the screen irrespective of the size of the screen. Accordingly, operations related to the displayed image, such as entering, can be performed comfortably and accurately, and the image can be confirmed with ease even from a relatively distant place, allowing, at the same time, installation in a small place.

A second object of this invention is to provide an electronic blackboard apparatus which allows input and erasing of information to be performed comfortably and accurately.

To achieve this object, the input instrument is composed of a marker for entering at the screen information to be displayed and an eraser for erasing the information displayed on the screen. With this arrangement, the input or erasing of information can be performed comfortably and accurately solely by selectively operating the marker or the eraser.

A third object of this invention is to provide an electronic blackboard apparatus which allows information to be written on a screen by means of a drawing medium such as ink and to be erased therefrom.

To achieve this object, the screen consists of a drawing board for hand drawing input on which drawing can be performed with a drawing medium such as ink and which allows repeated use, a marker being equipped with the drawing medium allowing drawing on the drawing board, and an eraser being equipped with an erasing member capable of erasing information drawn on the drawing board with the drawing medium. With this construction, information can be entered and drawn on the screen with ink or the like by manipulating the marker on the screen, and, by manipulating the eraser, the drawing with ink or the like can be erased along with the information.

Other objects, constructions and effects of this invention will become apparent from the following description.

### BRIEF DESCRIPTION OF THE DRAWINGS

Figs. 1 through 4 show a first embodiment of the present invention, of which:
Fig. 1 is a perspective view of an electronic blackboard apparatus;
Fig. 2 is a schematic block diagram showing the electric system in the apparatus of Fig. 1;
Fig. 3 is a detailed block diagram showing a data processor; and
Fig. 4 is a detailed block diagram showing a display control circuit.

Figs. 5 through 10 show a second embodiment of the present invention, of which:

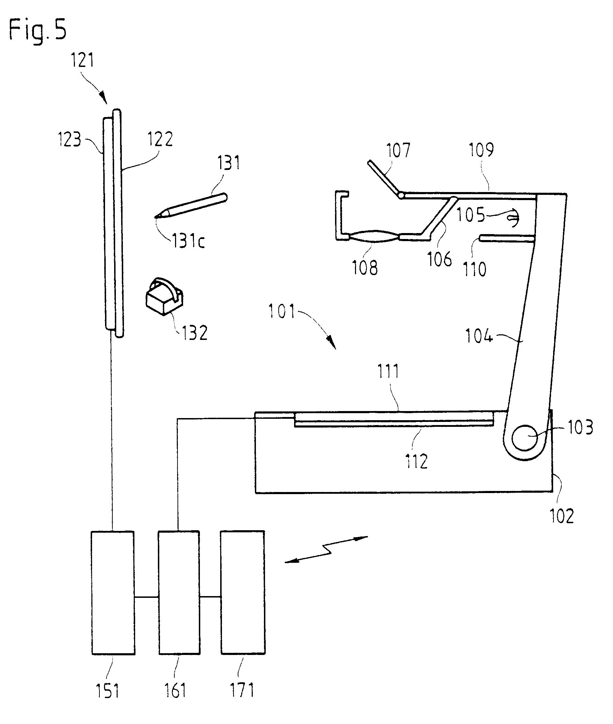

Fig. 5 is a partly cutaway front view;

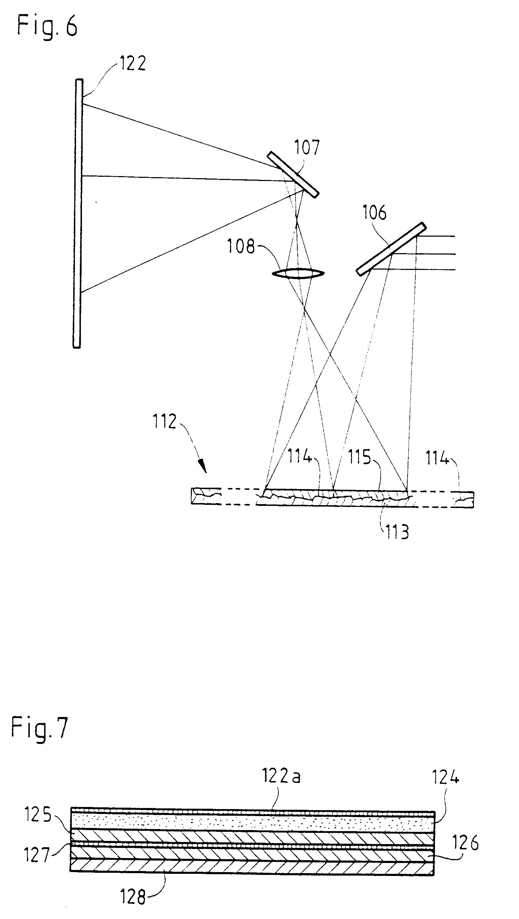

Fig. 6 is a diagram showing an optical system along with details of a concave mirror;
Fig. 7 is a cross-sectional view showing a part of an electronic blackboard apparatus;

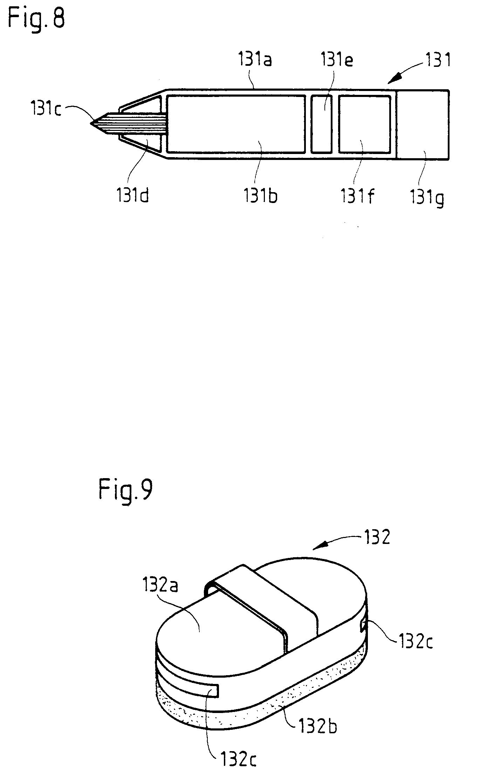

Fig. 8 is a schematic cross-sectional view of a marker;
Fig. 9 is a perspective view of an eraser; and

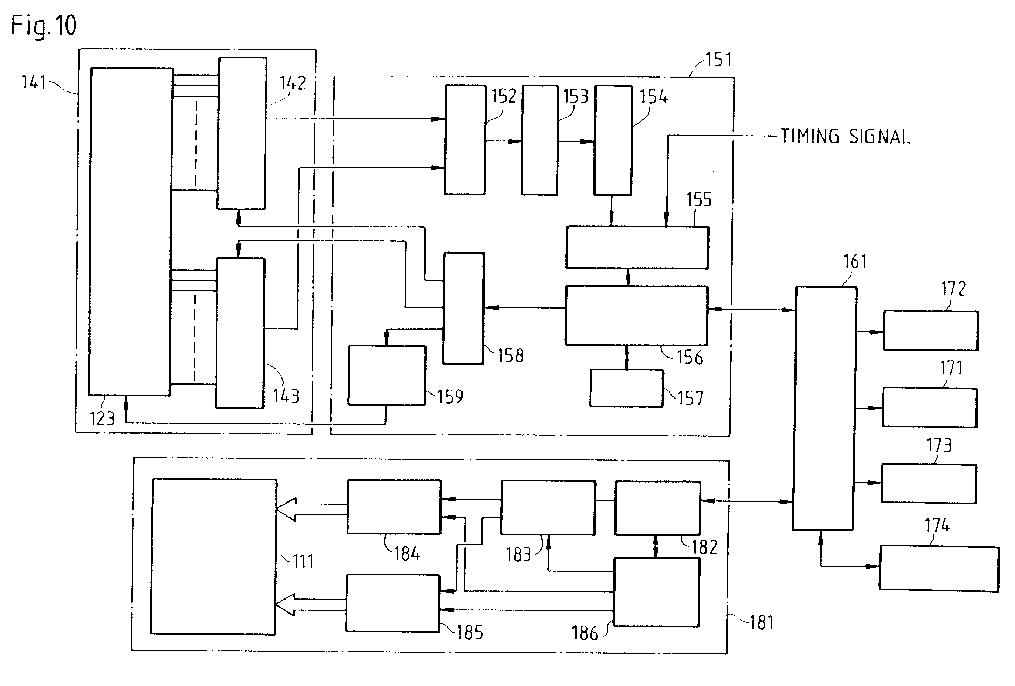

Fig. 10 is a block diagram showing a drive circuit for a tablet and a liquid crystal display.

### BEST MODE FOR CARRYING OUT THE INVENTION

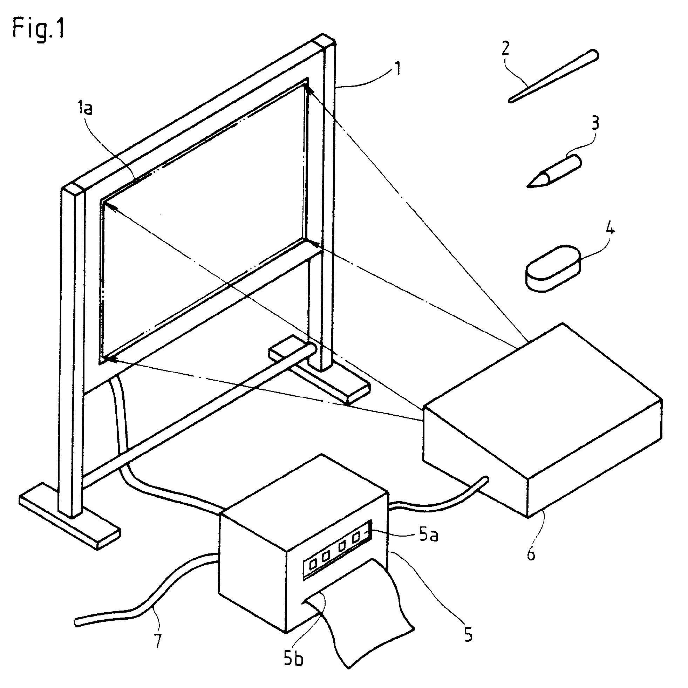

Fig. 1 shows the present invention as embodied in an electronic blackboard apparatus, which includes an electronic blackboard 1, a wand 2, a marker 3, an eraser 4, a control box 5, a video projector 6 and a telephone line 7.

The electronic blackboard 1 has a plain white drawing board 1a, which constitutes a screen. Manipulation of the wand 2, the marker 3, or the eraser 4 on this drawing board 1a causes sensor control sections (not shown) to operate so as to detect the position of the instrument being manipulated and discriminate the kind of instrument, generating data composed of coordinate values representing the position and a discrimination signal indicating the kind of instrument.

Actually, there is provided a plurality of markers 3 respectively equipped with pen bodies having inks of different colors, such as black, red, and blue. Discrimination between these markers is also possible.

The electronic blackboard 1 and the instruments belonging thereto, i.e., the wand 2, the marker 3, and the eraser 4, may consist of those proposed by the present applicant in "Electronic Blackboard Apparatus" (Japanese Patent Laid-Open No. 62-284377).

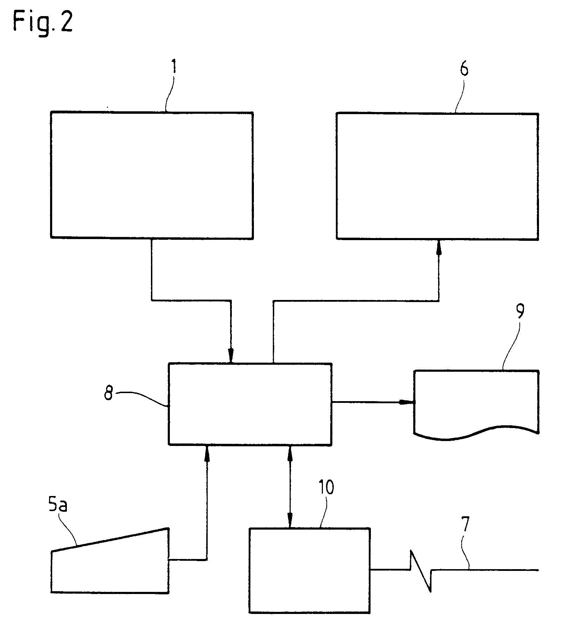

The control box 5 has on its front surface various switches 5a and a discharge slot 5b for printing paper and, as shown in Fig. 2, contains a data processor 8, a printer 9 and a modem 10.

The video projector 6 is of a well-known type which receives image signals such as a video signal and an RGB signal to generate a projection light in accordance therewith, forming an image by projecting this projection light. In the example shown, the projection light is projected onto the drawing board 1a of the electronic blackboard 1.

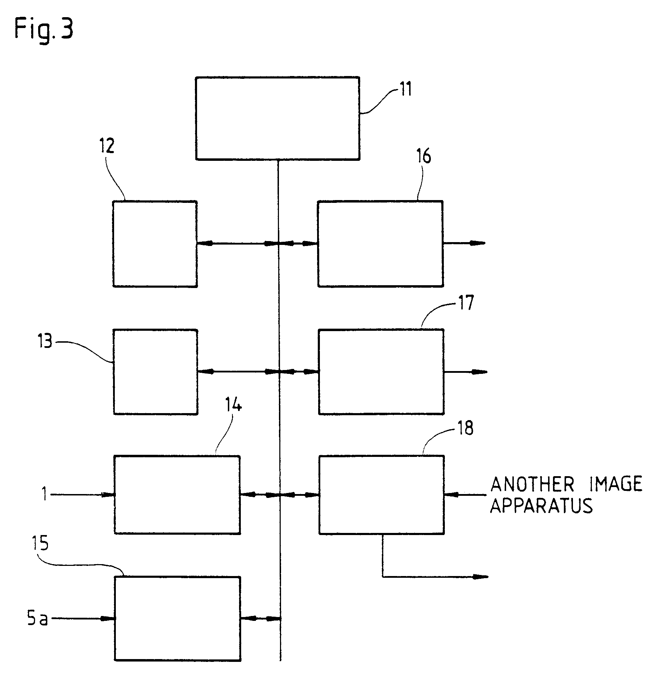

Fig. 3 shows details of the data processor 8, which is equipped with a microprocessor (CPU) 11, a frame memory 12, an overlay memory 13, an electronic blackboard interface 14, a switch interface 15, a printer interface 16, a modem interface 17, and a display control circuit 18.

The frame memory 12 and the overlay memory 13 are each endowed with a memory capacity corresponding to the resolution of the drawing board 1a of the electronic blackboard 1 (e.g., 1584 x 992 dots) (More specifically, the memory capacities of the frame memory 12 and the overlay memory 13 are so provided as to correspond to each of the three primary colors of light: red, green, and blue.).

Once written, the contents of the frame memory 12 are retained unless other items of data are added thereto. In contrast, the contents of the overlay memory 13 disappear unless data is written thereto again within a fixed period of time (which is usually several milliseconds).

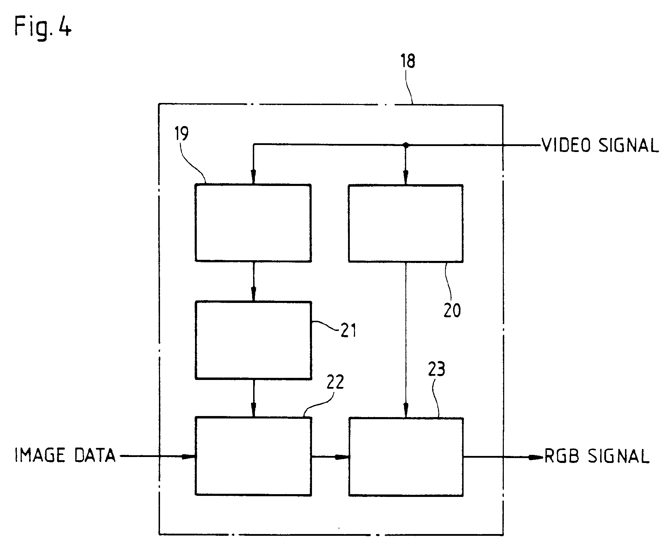

As shown in Fig. 4, the display control circuit 18 is composed of a synchronization separator circuit 19, a signal converter circuit 20, a clock generator circuit 21, an RGB processor 22, and a mixer circuit 23.

The operation of the above apparatus will now be described.

First, when the operator draws an image on the drawing board 1a of the electronic blackboard 1 with the marker 3, the electronic blackboard 1 detects the coordinate values in the X- and Y-directions based on the locus thereof and, at the same time, identifies the use of the marker 3 along with its color, transmitting the detection results to the data processor 8.

Upon receiving the coordinate values in the X- and Y-directions based on the manipulation of the marker 3 through the electronic blackboard interface 14, the microprocessor 11 of the data processor 8 writes the bit "1" to the address which corresponds to the above coordinates values and which is situated in that area of the frame memory 12 which corresponds to one of the three primary colors of light assumed by the color of the marker 3 when decomposed into the primary colors.

Further, when the operator erases the image on the drawing board 1a of the electronic blackboard 1 by using the eraser 4, the electronic blackboard 1 detects the coordinate values in the X- and Y-directions of the position of the erased image and identifies the use of the eraser 4, transmitting the detection results to the data processor 8.

Upon receiving the coordinate values in the X- and Y-directions based on the manipulation of the eraser 3, the microprocessor 11 of the data processor 8 writes the bit "0" to the address which corresponds to a predetermined range around the above coordinate values in each of the areas of the frame memory 12 corresponding to the three primary colors of light.

Further, when the operator indicates a position on the drawing board 1a of the electronic blackboard 1 by using the wand 2, the electronic blackboard detects the coordinate values in the X- and Y-directions of the position and identifies the use of the wand 2, transmitting the detection results to the data processor 8.

Upon receiving the coordinate values in the X- and Y-directions based on the use of the wand 2, the microprocessor 11 of the data processor 8 causes a predetermined cursor pattern, e.g., an arrow "↑", to be generated from a character generator (not shown) and writes this pattern "↑" to the address which corresponds to the above coordinate values and which is in that area of the overlay memory 13 corresponding to one of the three primary colors of light assumed by the color of this cursor pattern "↑" when decomposed into the three primary colors of light. When the operator stops using the wand 2 and the coordinate values of the point indicated thereby cease to be detected by the electronic blackboard 1, the data in the overlay memory 13, i.e., the cursor pattern "↑", disappears, as in the above-described case.

On that occasion, the RGB processor 22 of the display control circuit 18 reads, with a predetermined timing, the contents of the frame memory 12 and the overlay memory 13 and prepares a well-known RGB signal, transmitting it to the video projector 6 through the mixer circuit 23.

The video projector 6 generates a projection light in accordance with the above RGB signal and projects it onto the drawing board 1a of the electronic blackboard 1. As a result, a color image based on the use of the marker 3 and the eraser 4 is displayed on the drawing board 1a, along with the cursor pattern "↑" based on the use of the wand 2.

Further, if, on this occasion, the projection light is so projected onto the drawing board 1a that the point indicated by the wand 2, the marker 3, and the eraser 4 coincides with the position at which the corresponding image is projected, the projection light representing the image of the point can be projected in correspondence with its position on the drawing board 1a indicated by the wand 2, the marker 3 or the eraser 4. Accordingly, when the marker 3 is moved on the drawing board 1a, an image in accordance with the locus of the movement is displayed on the drawing board 1a.

If, on this occasion, a marker 3 having a pen body out of ink is used, only the image by the projection light is displayed on the drawing board 1a in accordance with the locus of the movement thereof. Further, if an eraser whose use is not detected by the electronic blackboard 1 is used, only the image drawn with the marker 3 can be erased, retaining the image by the projection light as it is on the drawing board 1a.

If there is received a video signal from some other image apparatus, such as a TV tuner or a VTR, the synchronization separator circuit 19 in the display control circuit 18 separates a synchronization signal from this video signal, and clocks based on this synchronization signal are generated by the clock generator circuit 21 and supplied to the RGB processor 22, with the above video signal being converted into an RGB signal by the signal converter circuit 20.

The RGB processor 22 reads the contents of the frame memory 12 and the overlay memory 13 in accordance with the above-mentioned clocks to prepare an RGB signal, which is inserted, by the mixer circuit 23, into the RGB signal from the signal converter circuit 20 and transmitted to the video projector 6.

Accordingly, displayed on the drawing board 1a is a composite image consisting of the video image from the other image apparatus and the image drawn with the marker 3, etc. superimposed thereon.

Further, if the apparatus is connected to another similar apparatus through the modem interface 17, the modem 10, and the telephone line 7 to effect data exchange therebetween, coordinate values, identification information, etc. entered at the electronic black board 1 or the contents of the frame memory 12 and of the overlay memory 13 are transmitted to that apparatus, with an image similar to that described above being also displayed on the drawing board thereof. Thus, if used in a television conference or the like, this arrangement can provide the effect or the ease of data recognition of sharing the same blackboard.

Further, if, of the switches 5a, the one for giving a print-out command, the microprocessor 11 transmits the contents of the frame memory 12 to the printer 9 through the printer interface 16 to produce a hard copy thereof.

Further, while in the above description an image which is exactly in accordance with coordinate values entered with the marker 3, etc. is displayed, it is also possible to display image processing results or data processing results based on these coordinate values. That is, it is also possible to effect character recognition from coordinate values in accordance with the locus of a character entered with, for example, the marker 3, and cause a corresponding pattern of the character to be generated from the character generator and displayed. Further, the display color may be changed arbitrarily, or a neutral color displayed.

Further, the image entered at the electronic blackboard 1 can be superimposed on an image read by a scanner or on an image prepared beforehand by a computer or the like as well as on a video signal before it is displayed.

Further, when using the marker 3 or the eraser 4, a cursor pattern different from the above-mentioned pattern "↑" may be written to the corresponding position in the overlay memory 13 and displayed so as to indicate the kind of instrument being used.

Further, while in the above embodiment an electronic blackboard is used as the coordinate input device, it is also possible to use a well-known tablet input device (a digitizer).

Figs. 5 through 10 show the second embodiment of the present invention. The reference numeral 101 of Fig. 5 indicates a projection means, which includes a base case 102, to which is attached, through a support shaft 103 or the like, the lower end of a support arm 104. Attached to the upper end of this support arm 104 is a projector case 109, which contains a light source 105, two reflecting mirrors 106 and 107, and a convex lens 108. Light from the light source 105 is reflected down by the reflecting lens 106 and travels through a lower opening 110, illuminating the upper surface of the base case 102. A condenser lens (not shown) is provided between the light source 105 and the reflecting mirror 106.

Provided on the upper surface of the base case 102, where the light from the light source 105 strikes, is a well-known transmission type liquid crystal display 111 comprising a plurality of horizontal and vertical electrodes which cross each other in a liquid crystal medium. Attached to the lower surface of this liquid crystal display 111 is a concave mirror 112, a detailed view of which is shown in Fig. 6.

As shown in Fig. 6, the concave mirror 112 includes a thin aluminum substrate 113 having a thickness of approximately 1mm, on the upper surface of which are provided at small pitches a multitude of concentric-circle-like grooves 114 each of which exhibits a surface inclined towards the center. A cover layer 115 of transparent synthetic resin is provided so as to cover these grooves 114, so that the upper surface of the concave mirror 112 is formed as a flat surface. Accordingly, the refraction by this concave mirror 112 is very small, so that image information displayed on the liquid crystal display 111 is reflected free from distortion. Due to the presence of this concave mirror 112, the light from the light source 105, which is reflected by the reflecting mirror 106, is then reflected by the concave mirror 112 and focused by the convex lens 108 before it is projected onto a screen 122 constituting the drawing board, by the reflecting mirror 107, which is supported in such a manner as to allow angular adjustment.

The liquid crystal display 111 is driven by a control circuit 151 for calculating coordinate data from an electronic blackboard 121 and by a processor 161 for transmitting the data from this control circuit 151 to the liquid crystal display 111 so as to display it there.

The electronic blackboard 121 is composed of a screen 122 and a tablet section 123 on the back surface thereof. As shown in Fig. 7 in section, the hand drawing section 122 includes a base 124 consisting of a flat plate of asbestos calcium silicate, urethane foam or the like, and a drawing board 122a consisting of a non-magnetic material such as austenite-type stainless steel. The tablet section 123 includes a plurality of X-direction magnetostrictive transmission media 125 arranged at fixed intervals in the X-direction, a plurality of Y-direction magnetostrictive transmission media 126 arranged at fixed intervals in the Y-direction, and a spacer 127 arranged between the X-direction magnetostrictive transmission media 125 and Y-direction magnetostrictive transmission media 126. A back board 128 is attached to the back side of the Y-direction magnetostrictive transmission media 126. The surface of the drawing board 122a is made smooth by, for example, porcelain enameled finish, and thus drawing with the marker 131 shown in Fig. 8 and erasing with the eraser 132 shown in Fig. 9 can be performed thereon. A description of the magnetostrictive tablet 123 will be omitted here since it is described in detail in, for example, Japanese Patent Application No. 59-41376.

As shown in Fig. 8, the marker 131 includes a cylindrical case 131a of a non-magnetic metal, an ink chamber 131b lodged in this case 131a, a drawing core material 131c, one end of which protrudes beyond the tip of the case 131a and the other end of which is lodged in the ink chamber 131b, and an approximately truncated-cone-like permanent magnet 131d which has a central through-hole for the core material 131c to extend through and which serves to impart magnetic flux to the tablet 123. The ink chamber 131b and the core material 131c are slidably lodged in the case 131a so that they may be withdrawn by pressure which is caused when a character, etc. is drawn on the drawing board 122a. Arranged behind the ink chamber 131b in the case 131a are a push-button-type switch 131e, such as a microswitch, which is adapted to operate upon the withdrawal of the ink chamber 131b, a light-emission control section 131f adapted to emit to the exterior, upon the operation of the switch 131e, a light, e.g., infrared rays, modulated in a way peculiar to this marker 131, and a light emitting section 131g composed of a battery and a light emitting element (neither of which are shown).

As shown in Fig. 9, the eraser 132 has basically the same structure as an ordinary eraser, namely, an erasing member 132b consisting of a sponge or the like is attached to the lower surface of an approximately elliptical hollow case 132a of synthetic resin. It differs from an ordinary eraser in that the case 132a contains a battery and a light emission control section (neither of which are shown). Further, provided in either end section of the case 132a are a permanent magnet for positional detection, a switch, and a light emitting section (none of which are shown) whose functions are similar to those of the permanent magnet 131d, switch 131e, and light emitting section 131f of the marker 131. Also provided in the case 132a is a light emission control section (not shown) whose function is similar to that of the light emission control section 131f of the marker 131, the battery of this light emission control section and that of the light emitting section being shared by the switch and the light emitting element which are provided in either end section of the case 132a. Provided at either end of the case 132 is a window 132c, through which are emitted infrared rays modulated to correspond to the switches.

Next, the operational control for the tablet 123 and the liquid crystal display 111 will be described with reference to Fig. 10. A tablet control circuit 141 has a tablet 123, an X-direction multiplexer 142, and a Y-direction multiplexer 143. An induced voltage due to electromagnetic induction is detected by a detection line in the tablet 123, and this induced voltage is transmitted to the control circuit 151 through the X-direction and Y-direction multiplexers 142 and 143, indicating the locus of a figure or of a character in X- and Y-coordinates.

In the control circuit 151, the induced voltage is amplified by an amplifier 152, rectified into a DC voltage by a detector 153, and converted into a digital value by an analog/digital (A/D) converter 154. This digital signal is applied through an input buffer 155 to an arithmetic processing circuit 156, where arithmetic processing is performed using the previous induced voltage sample (the digital value) temporarily stored in a memory 157 and data received from an input buffer 155, thereby determining the X- or Y-coordinate value. Further, this arithmetic processing circuit 156 transmits control signals through an output buffer 158 to the X- and Y-direction multiplexers 142 and 143, so as to alternately transmit induced voltages in the X- and Y-directions to the amplifier 152. A drive power source 159 supplies a sinusoidal current to the excitation line of the tablet 123.

A light receiving section is provided in, for example, the electronic blackboard apparatus 121, so that this section can receive the infrared rays from the marker 131 or the eraser 132, and an output signal from this light receiving section is used as a timing signal to be supplied to the input buffer 155. This timing signal is used for transmitting, from the arithmetic processing circuit 156 to the processor 161, the data from the tablet 123 only when a figure or a character is being drawn on the hand drawing section 122 with the marker 131 or being erased therefrom by the eraser 132.

The positional data transmitted to the processor 161, consisting of X- and Y-direction coordinate values, is also transmitted through a control circuit 182 of a display drive circuit 181 to a display memory 183, where it is stored in a fixed sequence and successively read out through timing pulses from the display control circuit 182 so as to be supplied to X- and Y-direction drivers 184 and 185. Supplied to these X- and Y-direction drivers 184 and 185 are scanning pulses generated by a scanning circuit 186 in synchronism with the timing pulses, and the drivers 184 and 185 drive those electrodes of the liquid crystal display 111 corresponding to the X- and Y-direction coordinates, displaying at the corresponding position on the liquid crystal display 111 the point indicated on the tablet 123.

In this way, a figure or a character drawn on the liquid crystal display 111 with the marker 131 is displayed on this liquid crystal display 111 in a visible form and in exactly the same style. This display on the liquid crystal display 111 is projected onto the screen 122 by the light from the light source 105. Further, this display can be monitored by a monitor 172, which is connected to the processor 161, and produced as a hard copy by a printer 173 connected likewise to the processor 161. Further, connected to the processor 161 is a modem 171, by means of which coordinate data can be transmitted through the telephone line to the tablet section 123 of a similar apparatus installed in a distant place, and coordinate data from that apparatus can be received. Also connected to this processor 161 is an external memory device 174 for storing on a floppy disk positional data transmitted to this processor 161 and for transmitting to this processor 161 information on figures, characters, etc. stored on a floppy disk by an external input means.

Further, by adding a text editing function to the processor 161, it is made possible to perform the operations of modification, addition, and deletion on characters, etc. once entered. Further, adding a figure processing function to the processor makes it possible to utilize CAD, CAM, etc., so that not only hand-drawn characters or figures, but also texts, figures, etc. prepared beforehand can be displayed.

When the eraser 132 is used for the purpose of erasing a character or a figure drawn with the marker 131 on the screen 122 or correcting the position thereof, the character, etc. is erased by the erasing material 132b of the eraser 132, and, at the same time, the control circuit 151 is so instructed that the positional information already detected by the tablet 123 by infrared rays from the eraser 132 should be deleted. Then, the coordinate values of the positions indicated by the magnets of the eraser 132 are erased, with only the remaining coordinate positions being displayed. In this embodiment, position detecting magnets are arranged at two positions on the eraser 132; when both of these magnets abut against the drawing board 122, the control circuit 151 calculates from the coordinate values related to these two positions the position of the straight line connecting them, and calculates the erasion range based on this straight line, deleting the coordinate values concerned from the stored coordinate values.

While in the above embodiment the tablet 123 is of a magnetostrictive type, it may, of course, be of an electromagnetic-induction type or a capacitance type. Further, while in the above embodiment infrared rays are used for the timing signal, it is also possible to use electric waves through wire or by wireless. Further, when the projection is performed in a dark environment with a view to making clear the projection on the screen, it may be so arranged that a spot lighting is applied exclusively to the screen 122.

Thus, in accordance with this embodiment, a tablet and a screen are formed integrally, and image information entered at this tablet is displayed on a liquid crystal display, with this display being projected onto the screen. Accordingly, this embodiment allows effective use of the area of the place of meeting where it is used. Further, it is made possible to display data along with a figure or a table previously input to an external memory device and to project onto the screen synthesized information consisting of information drawn on the drawing board and information stored in an external memory device.

## Claims

1. An electronic blackboard apparatus comprising:
a screen (1, 121) ;
a coordinate input device (1a, 123) integrally formed with said screen;
an input instrument (2, 3, 4, 131, 132) for indicating to said coordinate input device an input position on one input side of the screen to be measured thereby; and
a projection means (6, 101) for projecting, from the input side, input information entered by said input instrument onto said screen in correspondence with the input position on said screen.

2. An electronic blackboard apparatus according to Claim 1, wherein said input instrument consists of a marker for entering information to be displayed on said screen and an eraser for erasing the information displayed on said screen.

3. An electronic blackboard apparatus according to Claim 2, wherein said screen consists of a drawing board on which drawing can be performed with a drawing medium such as ink and which allows repeated use;
said marker further including a drawing medium with which drawing can be performed on said drawing board; and
said eraser further including an erasing member capable of erasing information drawn on said drawing board with said drawing medium.

4. An electronic blackboard apparatus according to one of Claims 1, 2 and 3, wherein said projection means is an overhead projector equipped with a liquid crystal display panel.

5. An electronic blackboard apparatus according to one of Claims 1, 2 and 3, wherein said projection means is a video projector.

6. An electronic blackboard apparatus according to one of Claims 1, 2, 3 and 5, wherein an video image and said input information are combined with each other and integrally displayed on said screen.

7. An electronic blackboard apparatus according to one of Claims 1, 2, 3, 4, 5 and 6, further comprising a printer for printing said input information.

8. An electronic blackboard apparatus according to one of Claims 1, 2, 3, 4, 5, 6 and 7, further comprising a modulator-demodulator circuit which transmits and receives said input information through a telephone line.

9. An electronic blackboard apparatus according to one of Claims 1, 2, 3, 4, 5, 6, 7 and 8, further having a character recognizing function.

10. An electronic blackboard apparatus according to one of Claims 1, 2, 3, 4, 5, 6, 7, 8 and 9, further having a text editing function.

11. An electronic blackboard apparatus according to one of Claims 1, 2, 3, 4, 5, 6, 7, 8, 9 and 10, further having a plotting function.

12. An electronic blackboard apparatus according to one of Claims 1, 2, 3, 4, 5, 6, 7, 8, 9, 10 and 11, wherein a figure previously prepared in an external memory device can be displayed.

## Patentansprüche

1. Elektronische Tafel mit:
einem Bildschirm (1, 121),
einer Koordinateneingabeeinrichtung (1a, 123), die in den Bildschirm integriert ist,
einem Eingabeinstrument (2, 3, 4, 131, 132) zur Angabe einer Eingabeposition auf einer Eingabeseite des Bildschirms, welche Eingabeposition von der Koordinateneingabeeinrichtung zu messen ist, und
einer Projektionseinrichtung (6, 101) zum Projizieren der mit dem Eingabeinstrument eingegebenen Information von der Eingabeseite aus auf den Bildschirm, in Übereinstimmung mit der eingegebenen Position auf dem Bildschirm.

2. Elektronische Tafel nach Anspruch 1, bei der das Eingabeinstrument aus einem Markierer zur Eingabe von auf dem Bildschirm anzuzeigender Information und einem Löscher zum Löschen der auf dem Bildschirm angezeigten Information besteht.

3. Elektronische Tafel nach Anspruch 2, bei der der Bildschirm aus einem Zeichenbrett besteht, auf dem mit einem Zeichenmedium wie etwa Tinte gezeichnet werden kann und das eine wiederholte Verwendung gestattet,
der Markierer ein Zeichenmedium enthält, mit dem auf dem Zeichenbrett gezeichnet werden kann und
der Löscher ein Löschelement aufweist, das in der Lage ist, die mit dem Zeichenmedium gezeichnete Information auf dem Zeichenbrett zu löschen.

4. Elektronische Tafel nach einem der Ansprüche 1, 2 und 3, bei dem die Projektionseinrichtung ein mit einer Flüssigkristall-Anzeigetafel versehener Overhead-Projektor ist.

5. Elektronische Tafel nach einem der Ansprüche 1, 2 und 3, bei dem die Projektionseinrichtung ein Video-Projektor ist.

6. Elektronische Tafel nach einem der Ansprüche 1, 2, 3 und 5, bei dem ein Videobild und die eingegebene Information miteinander kombiniert und gemeinsam auf dem Bildschirm dargestellt werden.

7. Elektronische Tafel nach einem der Ansprüche 1, 2, 3, 4, 5 und 6, mit einem Drucker zum Drucken der eingegebenen Information.

8. Elektronische Tafel nach einem der Ansprüche 1, 2, 3, 4, 5, 6 und 7, mit einer Modulator-Demodulator-Schaltung, die die eingegebene Information über eine Telefonleitung sendet und empfängt.

9. Elektronische Tafel nach einem der Ansprüche 1, 2, 3, 4, 5, 6, 7 und 8, mit einer Zeichenerkennungsfunktion.

10. Elektronische Tafel nach einem der Ansprüche, 1, 2, 3, 4, 5, 6, 7, 8 und 9, mit einer Text-Edierfunktion.

11. Elektronische Tafel nach einem der Ansprüche. 1, 2, 3. 4, 5, 6, 7, 8, 9 und 10, mit einer Plotter-Funktion.

12. Elektronische Tafel nach einem der Ansprüche, 1, 2, 3, 4, 5, 6, 7, 8. 9, 10 und 11, bei der eine vorab in einem externen Speicher vorbereitete Figur dargestellt werden kann.

## Revendications

1. Tableau électronique, comprenant:
un écran (1, 121);
un dispositif (1a, 123) d'entrée de coordonnées faisant corps avec ledit écran;
un instrument d'entrée (2, 3, 4, 131, 132) pour indiquer audit dispositif d'entrée de coordonnées sur un côté d'entrée de l'écran, une position d'entrée à mesurer par celui-ci; et
un moyen de projection (6, 101) pour projeter sur ledit écran, depuis le côté d'entrée, en correspondance avec la position d'entrée sur ledit écran, des informations d'entrée introduites par ledit instrument d'entrée.

2. Tableau électronique selon la revendication 1, dans lequel ledit instrument d'entrée est constitué par un marqueur pour introduire les informations à afficher sur ledit écran et un effaceur pour effacer les informations affichées sur ledit écran.

3. Tableau électronique selon la revendication 2, dans lequel ledit écran est constitué par une planche à dessin sur laquelle un dessin peut être réalisé à l'aide d'un agent de dessin tel que de l'encre, et qui permet une utilisation répétée;
ledit marqueur comportant en outre un agent de dessin avec lequel un dessin peut être réalisé sur ladite planche à dessin; et
ledit effaceur comportant en outre un élément d'effacement apte à effacer des informations dessinées avec ledit agent de dessin sur ladite planche à dessin.

4. Tableau électronique selon l'une des revendications 1, 2 et 3, dans lequel ledit moyen de projection est un rétroprojecteur équipé d'un tableau d'affichage à cristaux liquides.

5. Tableau électronique selon l'une des revendications 1, 2 et 3, dans lequel ledit moyen de projection est un projecteur vidéo.

6. Tableau électronique selon l'une des revendications 1, 2, 3 et 5, dans lequel une image vidéo et lesdites informations d'entrée sont combinées, l'ensemble étant affiché sur ledit écran.

7. Tableau électronique selon l'une des revendications 1, 2, 3, 4, 5 et 6, comportant en outre une imprimante pour imprimer lesdites informations d'entrée.

8. Tableau électronique selon l'une des revendications 1, 2, 3, 4, 5, 6 et 7, comportant en outre un modem qui émet et reçoit lesdites informations d'entrée par l'intermédiaire d'une ligne téléphonique.

9. Tableau électronique selon l'une des revendications 1, 2, 3, 4, 5, 6, 7 et 8, ayant en outre une fonction de reconnaissance de caractères.

10. Tableau électronique selon l'une des revendications 1, 2, 3, 4, 5, 6, 7, 8 et 9, ayant en outre une fonction de traitement de texte.

11. Tableau électronique selon l'une des revendications 1, 2, 3, 4, 5, 6, 7, 8, 9 et 10, ayant en outre une fonction de tracé de courbes.

12. Tableau électronique selon l'une des revendications 1, 2, 3, 4, 5, 6, 7, 8, 9, 10 et 11, dans lequel une figure préalablement préparée dans un dispositif extérieur de mémoire peut être affichée.
